# EUROPÄISCHE PATENTSCHRIFT

(11) **EP 1 074 431 B1**
(45) Veröffentlichungstag und Bekanntmachung des Hinweises auf die Patenterteilung: **22.11.2006**
(21) Anmeldenummer: 00115014.3
(22) Anmeldetag: 24.07.2000
(51) Int. Cl.: B60Q 3/02

(54) **Innenraumbeleuchtung in Fahrzeug und Steuerungsverfahren**
Interior lighting for vehicle and control thereof
Eclairage intérieur de véhicule et son contrôle

(30) Priorität: 03.08.1999 DE 19936358
(43) Veröffentlichungstag der Anmeldung: 07.02.2001
(73) Patentinhaber: Volkswagen Aktiengesellschaft, 38436 Wolfsburg (DE)
(72) Erfinder: Müller, Michael, 38518 Gifhorn (DE); Pietsch, Matthias, 38154 Königslutter (DE)

(56) Entgegenhaltungen:
- DE-A- 4 232 545
- DE-A- 4 305 796
- US-A- 4 358 713
- PATENT ABSTRACTS OF JAPAN vol. 018, no. 041 (M-1546), 21. Januar 1994 (1994-01-21) & JP 05 270314 A (HINO MOTORS LTD), 19. Oktober 1993 (1993-10-19)

## Beschreibung

Die Erfindung betrifft die Innenraumbeleuchtung in einem Fahrzeug und sowie ein Steuerungsverfahren dafür. Die Fahrzeuginnenraumbeleuchtung umfaßt eine erste Beleuchtungsvorrichtung zum Beleuchten des Fahrzeuginnenraums, eine Zentralsteuerung zum Einstellen der Helligkeit der ersten Beleuchtungsvorrichtung in Abhängigkeit von Innenraumbeleuchtungsparametern des Fahrzeugs und mehrere Sensoren zum Erfassen der Innenraumbeleuchtungsparameter des Fahrzeugs, deren jeweiliges Ausgangssignal von der Zentralsteuerung eingelesen wird. Das Steuerungsverfahren zum Steuern der Fahrzeuginnenraumbeleuchtung des Fahrzeugs umfaßt die Schritte Erfassen von Innenraumbeleuchtungsparametern des Fahrzeugs mit Sensoren und Vergrößern oder Verkleinern der Helligkeit der ersten Beleuchtungsvorrichtung in Abhängigkeit von den Innenraumbeleuchtungsparametern des Fahrzeugs. Unter dem Begriff Innenraumbeleuchtungsparameter wird in dieser Beschreibung jeder Parameter verstanden, der das Ein- bzw. Ausschalten der Innenraumbeleuchtung beeinflußt, also etwa die Anwesenheit von Personen in der Fahrgastzelle oder das Öffnen einer Tür etc..

Im Stand der Technik umfaßt die Innenraumbeleuchtung eines Personenkraftfahrzeugs i. wes. eine Beleuchtungsvorrichtung, die im Fahrzeughimmel in etwa über dem Armaturenbrett angeordnet ist. Eine weitere Beleuchtungsvorrichtung befindet sich bisweilen im Kofferraum bzw. über der Ladefläche eines Kombifahrzeugs. Zur Steuerung der Innenraumbeleuchtung eines Fahrzeuges sind neben den Beleuchtungsvorrichtungen Sensoren an den Fahrzeugtüren vorgesehen bzw. mit der Zentralverriegelung des Fahrzeugs verbunden. Wird eine Fahrzeugtür geöffnet, so schaltet sich die Innenraumbeleuchtung ein. Nach dem Schließen der Tür wird die Innenraumbeleuchtung unmittelbar oder zeitverzögert ausgeschaltet. Wie aus DE 43 20 721 bekannt kann darüber hinaus zusätzlich eine Verbindung zur Motorsteuerung zur Erfassung des Fahrzeugzustandes vorgesehen sein. Damit läßt sich ein Verfahren und eine Steuerung einer Fahrzeuginnenraumbeleuchtung verwirklichen, beim dem/der der Ein- und/oder Ausschaltvorgang der Beleuchtungsvorrichtungen gedimmt abläuft, wobei die Dimmparameter, wie Ein- oder Ausschaltdimmzeit oder gewünschte Endhelligkeit, in Abhängigkeit von dem den Steuerungsvorgang aktivierenden Fahrzeugzustand vorgegeben werden.

Der Nachteil beim Stand der Technik liegt darin, daß die Innenraumbeleuchtung nur im Zusammenhang mit dem Öffnen einer Tür aktiviert wird. Nach einer bestimmten Zeitspanne wird die Innenraumbeleuchtung ausgeschaltet, und die Fahrgastzelle ist dunkel der Fahrgast bzw. der Fahrer z.B. muß zum Lesen einer Karte die Innenraumbeleuchtung oder eine weitere Lampe etwa im Handschuhfach etc. manuell einschalten.

Die gattungsgemäße JP 05270314 beschreibt eine Innenraumbeleuchtung für einen Bus, bei der ein Farbauswahlschalter automatisch eine geeignete Farbe für die Innenraumbeleuchtung in Abhängigkeit von der Außentemperatur auswählt.

Die Aufgabe der vorliegenden Erfindung ist es, eine Fahrzeuginnenraumbeleuchtung und ein Steuerungsverfahren anzugeben, mit der/dem sichergestellt ist, daß der Fahrgast eines Fahrzeugs bei jedem Fahrzustand des Fahrzeugs die optimalen Lichtverhältnisse vorfindet und sich damit im Fahrzeug wohl fühlt.

Diese Aufgabe wird gelöst durch die Fahrzeuginnenraumbeleuchtung nach Anspruch 1 und das Steuerungsverfahren nach Anspruch 6. Bevorzugte Ausführungsformen der Erfindung sind Gegenstand der Unteransprüche.

Die Grundidee der Erfindung beruht darauf, daß nach dem Start des Fahrzeugs das Licht im Innenraum von weiß auf eine als angenehm empfundene Farbe wechselt, bei der der Fahrgast seine Umgebung noch ohne weiteres erkennen kann, durch die der Fahrer im Straßenverkehr aber nicht geblendet wird oder seine Wahrnehmungsfähigkeit beeinträchtigt wird. Damit ist es möglich, z.B. Karten wenigstens über eine kurze Zeitspanne zu lesen, ohne die Sehkraft zu überanstrengen, oder Gegenstände in der Fahrgastzelle ohne Mühe zu erkennen. Andererseits kann aufgrund der ausgesuchten Farbe des Lichtes im Innenraum des Fahrzeugs die Verkehrssituation um das Fahrzeug herum vom Fahrer noch mit ausreichendem Kontrast wahrgenommen werden, der Fahrer wird also durch die Beleuchtung der Fahrgastzelle nicht in seinem Verhalten im Straßenverkehr gestört. Die erfindungsgemäße Fahrzeuginnenraumbeleuchtung umfaßt daher neben der ersten Beleuchtungsvorrichtung eine zweite Beleuchtungsvorrichtung. Während die erste Beleuchtungsvorrichtung wie im Stand der Technik unmittelbar oder zeitverzögert - aber innerhalb einer vorgegebenen Zeitspanne - in Bezug auf das Öffnen einer Tür "hart" oder "weich" ein- bzw. ausgeschaltet wird, dient die erfindungsgemäße zweite Beleuchtungsvorrichtung dazu, während der Fahrt den Fahrzeuginnenraum mit Licht einer gewünschten Farbe auszuleuchten.

Die erfindungsgemäße Fahrzeirginnenraumbeleuchtung mit einer ersten Beleuchtungsvorrichtung zum Beleuchten des Fahrzeuginnenraums, einer Zentralsteuerung zum Einstellen der Helligkeit der ersten Beleuchtungsvorrichtung in Abhängigkeit von Innenraumbeleuchtungsparametern des Fahrzeugs und mehreren Sensoren zum Erfassen der Innenraumbeleuchtungsparameter des Fahrzeugs, deren jeweiliges Ausgangssignal von der Zentralsteuerung eingelesen wird, ist dadurch gekennzeichnet, daß die Farbe des von einer zweiten Beleuchtungsvorrichtung ausgestrahlten Lichtes in Abhängigkeit von den Innenraumbeleuchtungsparametern des Fahrzeugs veränderbar ist.

Ein Innenraumbeleuchtungsparameter ist wie bereits oben erläutert u.a. dadurch bestimmt, ob das Fahrzeug fährt oder ein Fahrgast ein- oder aussteigt. Um diese beiden Innenraumbeleuchtungsparameter unterscheiden zu können und die Farbe des Lichtes von der zweiten Beleuchtungsvorrichtung entsprechend einstellen zu können, ist ein Sensor mit den Fahrzeugtüren verbunden.

Bei einer bevorzugten Ausführungsform der Fahrzeuginnenraumbeleuchtung umfaßt die zweite Beleuchtungsvorrichtung mindestens zwei Lichtquellen, wobei die mindestens eine erste und die mindestens eine zweite Lichtquelle unterschiedlich farbiges Licht abstrahlen. Insbesondere strahlt die erste Lichtquelle weißes Licht aus, während die zweite Lichtquelle z.B. grünes, gelbes oder rotes Licht ausstrahlt. Damit hat der Fahrgast beispielsweise beim Einsteigen von der zweiten Beleuchtungsvorrichtung weißes Licht, wodurch die Umgebung gut sichtbar ausgeleuchtet wird. Schließt er die Tür, so ändert sich das Licht der zweiten Beleuchtungsvorrichtung von weiß zu beispielsweise grün, gelb oder rot, so daß die Fahrgastzelle in der gewünschten Farbe beleuchtet wird.

Sollten die Lichtverhältnisse außerhalb des Fahrzeugs so sein, daß überhaupt keine Beleuchtung in dem Fahrzeug benötigt wird, wird in einer bevorzugten Ausführungsform der Erfindung die zweite Beleuchtungsvorrichtung nicht eingeschaltet. Dazu ist erfindungsgemäß ein Sensor mit der Außenbeleuchtung des Fahrzeugs, insbesondere dem Abblendlichtschalter, verbunden. Ist die Außenbeleuchtung eingeschaltet, wird auch die zweite Beleuchtungsvorrichtung eingeschaltet. Ist dagegen die Außenbeleuchtung des Fahrzeugs nicht eingeschaltet, so erkennt das System, daß eine Beleuchtung der Fahrgastzelle nicht notwendig ist und unterbricht den Einschaltvorgang der zweiten Beleuchtungsvorrichtung.

Das Verfahren zum Steuern der erfindungsgemäßen Fahrzeuginnenraumbeleuchtung umfaßt die Schritte: Erfassen von Innenraumbeleuchtungsparametern des Fahrzeugs mit Sensoren, Vergrößern oder Verkleinern der Helligkeit einer ersten Beleuchtungsvorrichtung in Abhängigkeit von den Innenraumbeleuchtungsparametern des Fahrzeugs und Ändern des Farbortes des von einer zweiten Beleuchtungsvorrichtung ausgestrahlten Lichtes in Abhängigkeit von den Innenraumbeleuchtungsparametern des Fahrzeugs. Gekennzeichnet ist das erfindungsgemäße Verfahren dadurch, dass die zweite Beleuchtungsvorrichtung eingeschaltet wird, wenn eine Außenbeleuchtung des Fahrzeugs eingeschaltet ist.

Das Ändern des Farbortes bei der bevorzugten Ausführungsform der Fahrzeuginnenraumbeleuchtung mit mindestens zwei Lichtquellen der zweiten Beleuchtungsvorrichtung erfolgt durch Verkleinern der Helligkeit der ersten Lichtquelle und das Vergrößern der Helligkeit der zweiten Lichtquelle. Dabei kann das Verkleinern der Helligkeit der mindestens einen ersten Lichtquelle und das Vergrößern der Helligkeit der mindestens einen zweiten Lichtquelle mit jeweils unterschiedlichen Zeitkonstanten erfolgen. Bei unterschiedlichen Zeitkonstanten kann man so den Übergang von weiß auf z.B. gelb direkt erfolgen lassen oder den Übergang so gestalten, daß das weiße Licht zunächst (fast ganz) ausgeschaltet wird und das gelbe Licht erst anschließend eingeschaltet wird.

In einer weiteren bevorzugten Ausführungsform erfolgt der Farbortwechsel durch das Verkleinern der Helligkeit mindestens einer ersten Lichtquelle von mindestens drei Lichtquellen, die jeweils unterschiedlich farbiges Licht abstrahlen. Dabei wird das weiße Licht durch drei Lichtquellen erzeugt, die Licht in den drei Grundfarben abstrahlen.

Weitere Merkmale und Vorteile der Erfindung ergeben sich aus der folgenden Beschreibung von bevorzugten Ausführungsformen, wobei bezug genommen wird auf die beigefügten Zeichnungen.
Fig. 1 zeigt eine Ausführungsform der erfindungsgemäßen Fahrzeuginnenraumbeleuchtung
Fig. 2 zeigt eine Ausführungsform des Verfahrens zum Steuern der Fahrzeuginnenraumbeleuchtung.
Fig. 3A und 3B zeigen weitere Einzelheiten von Schritten in dem Steuerungsverfahren nach Fig. 2.
Fig. 4 zeigt ein Beispiel für die Veränderung des Farbortes der zweiten Beleuchtungsvorrichtung bei einer bevorzugten Ausführungsform der Steuerung der Fahrzeuginnenraumbeleuchtung.

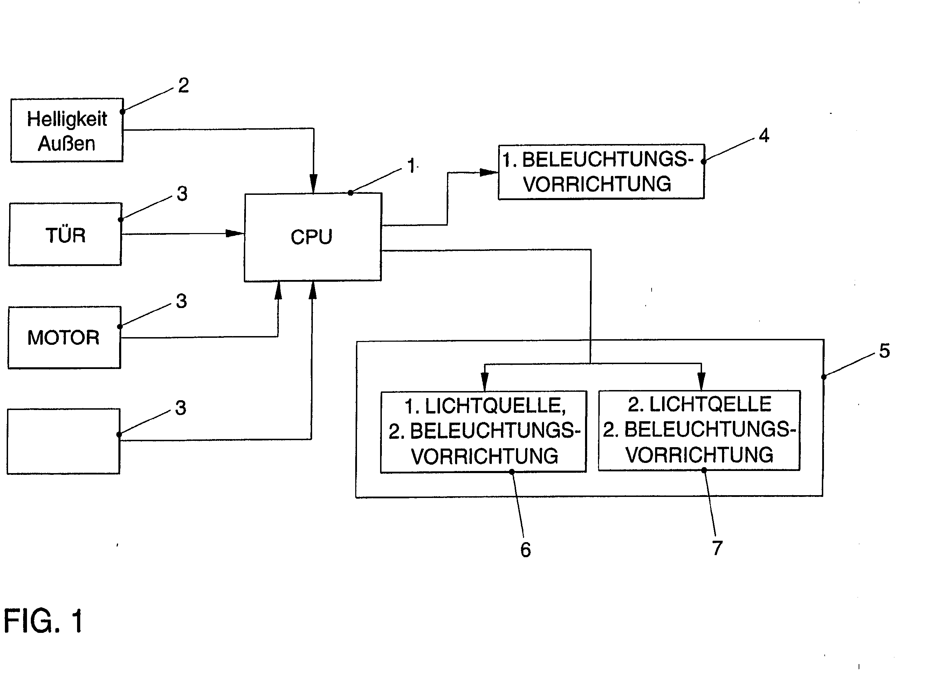

In Fig. 1 sind die wesentlichen Einrichtungen einer Fahrzeuginnenraumbeleuchtung dargestellt. Die Fahrzeuginnenraumbeleuchtung umfaßt eine erste Beleuchtungsvorrichtung 4 zum Beleuchten des Fahrzeuginnenraums. Bei einem Personenkraftfahrzeug nach dem Stand der Technik ist die Beleuchtungsvorrichtung üblicherweise im Himmel des Fahrzeugs in etwa über dem Armaturenbrett angeordnet. Weitere erste Beleuchtungsvorrichtungen können sich im Kofferraum bzw. über der Ladefläche eines Kombifahrzeugs befinden, die eingeschaltet werden, wenn die Hecktür des Fahrzeugs geöffnet wird. Eine Zentralsteuerung 1 dient zum Einstellen der Helligkeit der ersten Beleuchtungsvorrichtung(en) 4 in Abhängigkeit von Innenraumbeleuchtungsparametern des Fahrzeugs. Die Innenraumbeleuchtungsparameter sind u.a. durch das Öffnen einer Tür bestimmt, wobei dazwischen unterschieden werden kann, ob der Motor vor dem Öffnen der Tür bereits lief oder die Zündung erst nach dem Schließen der Tür eingeschaltet wird. Ferner ist das Einschalten der Beleuchtung in dem Fahrzeug von den Lichtverhältnissen außerhalb des Fahrzeugs abhängig. Ist es dunkel, so wird die Innenraumbeleuchtung eingeschaltet, wenn weitere der Innenraumbeleuchtungsparameter vorliegen. Ist es dagegen außerhalb des Fahrzeugs ausreichend hell, so wird trotz Vorliegen von weiteren Innenraumbeleuchtungsparametern die Innenraumbeleuchtung nicht eingeschaltet.

Die erste Beleuchtungsvorrichtung 4 ist gewöhnlich auch per Hand schaltbar (nicht dargestellt), d.h. der Fahrer bzw. Fahrgast kann die Steuerung so einstellen, daß immer, je nach Innenraumbeleuchtungsparametern oder nie die Beleuchtungsvorrichtung 4 eingeschaltet wird.

Um die oben genannten und weitere Innenraumbeleuchtungsparameter des Fahrzeugs erkennen zu können, sind Sensoren 2, 3 zur Steuerung der Innenraumbeleuchtung des Fahrzeugs vorgesehen, wobei der Sensor 2 zur Erfassung der Lichtverhältnisse in der Umgebung des Fahrzeugs dient, während die Sensoren 3 den Zustand der Fahrzeugtüren bzw. des Motors erfassen. Die Sensoren 3 für den Zustand der Fahrzeugtüren können dabei direkt und einzeln mit den Fahrzeugtüren verbunden sein und/oder mit der Zentralverriegelung des Fahrzeugs zusammenhängen. In beiden Fällen erhält die Zentralsteuerung 1 Information darüber, ob eine oder mehrere Türen geöffnet worden sind und die Beleuchtung der Fahrgastzelle erforderlich ist. Der Motorsensor 3 hängt vorzugsweise mit der Zündung zusammen. Weitere Sensoren 3, die hier nicht im einzelnen weiter erläutert werden, aber dem Fachmann im Prinzip bekannt sind, sind Fig. 1 durch ein dünn gezeichnetes Rechteck angedeutet.

Bei der bisher beschriebenen Innenraumbeleuchtung hat der Fahrgast bzw. der Fahrer nach einer gewissen Zeitspanne nach Öffnen und Schließen einer Tür keinerlei Innenraumbeleuchtung mehr zur Verfügung. Zum Lesen einer Karte bzw. beim Suchen und Aufnehmen von Gegenständen im Fahrzeug muß er folglich die Innenraumbeleuchtung oder eine weitere Lampe etwa im Handschuhfach etc, manuell einschalten. Da dies störend ist und u.U. die Aufmerksamkeit des Fahrers vom Geschehen auf der Fahrbahn ablenkt, sollte der Fahrgast eines Fahrzeugs bei jedem Fahrzustand des Fahrzeugs die optimalen Lichtverhältnisse vorfinden. Die Beleuchtung des Fahrgastraumes trägt auch dazu bei, daß sich Fahrer und Fahrgast im Fahrzeug wohl fühlen. Bei der erfindungsgemäßen Fahrzeuginnenraumbeleuchtung ist daher neben der ersten Beleuchtungsvorrichtung 4 eine zweite Beleuchtungsvorrichtung 5 vorgesehen. Die zweite Beleuchtungsvorrichtung 5 hat die Eigenschaft, daß die Farbe des von einer Lichtquelle ausgestrahlten Lichtes in Abhängigkeit von den Innenraumbeleuchtungsparametern des Fahrzeugs veränderbar ist.

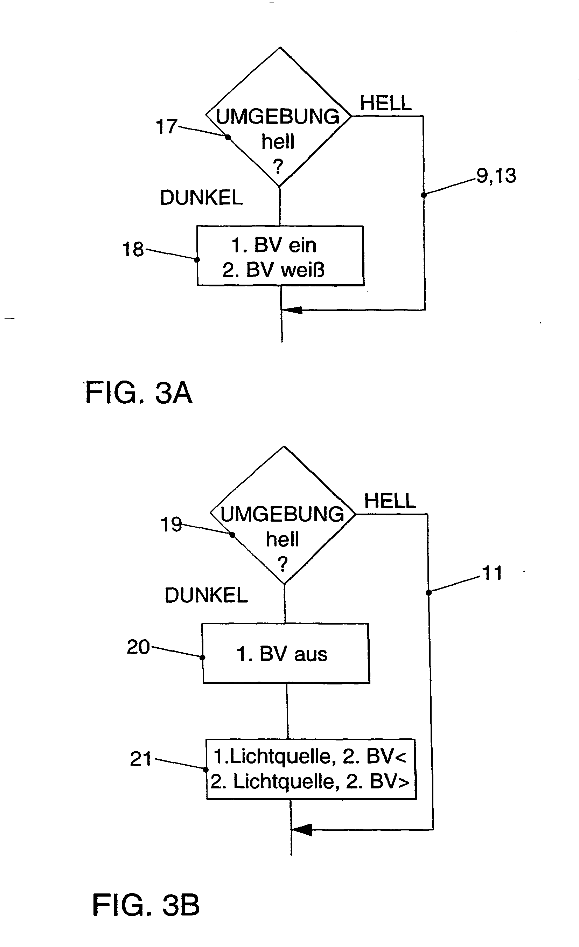

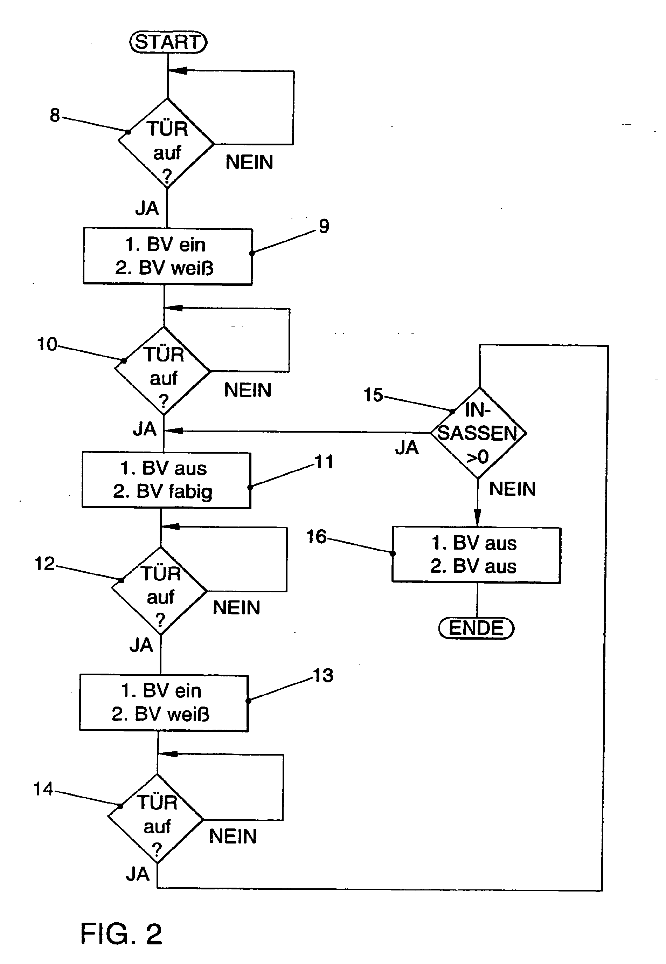

In der in Fig. 1 dargestellten Ausführungsform umfaßt die zweite Beleuchtungsvorrichtung 5 mindestens zwei Lichtquellen 6, 7. Die mindestens eine erste Lichtquelle 6 und die mindestens eine zweite Lichtquelle 7 strahlen Licht in unterschiedlichen Farben ab. Beide werden von der Zentralsteuerung 1 gegensinnig angesteuert, d.h. soll der Farbort der zweiten Beleuchtungsvorrichtung 5 verändert werden, so wird die Helligkeit der einen Lichtquelle 6 verkleinert, während die Helligkeit der anderen Lichtquelle 7 vergrößert wird. Dabei ist vorzugsweise die erste Lichtquelle 6 weiß, während die zweite Lichtquelle 7 farbig, d.h. beispielsweise gelb ist. Die Einzelheiten der Ansteuerung der beiden Lichtquellen 6 und 7 werden in Zusammenhang mit Fig. 2 erläutert.

In Fig. 2 ist eine Ausführungsform des erfindungsgemäßen Verfahrens zum Steuern einer Fahrzeuginnenraumbeleuchtung gezeigt. Das Verfahren nach dem Stand der Technik umfaßt die Schritte Erfassen von Innenraumbeleuchtungsparametern des Fahrzeugs mit Sensoren 2, 3 sowie Vergrößern oder Verkleinern der Helligkeit der ersten Beleuchtungsvorrichtung 4 in Abhängigkeit von den Innenraumbeleuchtungsparametern des Fahrzeugs, die mit den Sensoren 3 erfaßt wurden.

Wie oben bereits erläutert wurde, hat dieses Verfahren nach dem Stand der Technik einige Nachteile. Daher umfaßt die erfindungsgemäße Fahrzeuginnenraumbeleuchtung eine zweite Beleuchtungsvorrichtung 5. Das Verfahren weist entsprechend als weiteren Schritt Ändern des Farbortes des von der zweiten Beleuchtungsvorrichtung 5 ausgestrahlten Lichtes in den Innenraumbeleuchtungsparametern des Fahrzeugs auf. Das vollständige Verfahren, das von der Zentralsteuerung 1 in Fig. 1 abgearbeitet wird, ist in Fig. 2 in Form eines Flußdiagramms dargestellt. Bei dem Flußdiagramm des erfindungsgemäßen Verfahrens in Fig. 2 wird davon ausgegangen, daß sich zunächst keine Person in dem Fahrzeug aufhält. In Schritt 8 wird daher geprüft, ob eine Tür geöffnet wurde. Ist dies nicht der Fall, so springt das Programm zu "START" zurück. Wurde eine Tür des Fahrzeugs geöffnet, so wird in Schritt 9 die erste Beleuchtungsvorrichtung 4 (1.BV) sowie die zweite Beleuchtungsvorrichtung 5 (2.BV) mit weißem Licht eingeschaltet, um der einsteigenden Person das Einsteigen zu erleichtern. Das Licht der beiden Beleuchtungsvorrichtungen 4 und 5 bleibt solange unverändert, bis die Tür wieder geschlossen wird. Das Schließen der Tür wird in Schritt 10 geprüft. (In diesem Schritt 10 wird auch - was nicht dargestellt ist - geprüft, ob tatsächlich eine Person eingestiegen ist oder die Tür nur geöffnet und geschlossen wurde, ohne daß eine Person zu- oder ausgestiegen ist, z.B. indem geprüft wird, ob die Zentralverriegelung aktiviert wurde. Wird das Fahrzeug verschlossen, befindet sich weiterhin keine Person in dem Fahrzeug, und das Verfahren springt zu "START" zurück.) Wird die Tür geschlossen und ist eine Person zugestiegen, wird in Schritt 11 des Flußdiagramms 1.BV ausgeschaltet und der Farbort von 2.BV verändert. Dies kann beides gleichzeitig erfolgen oder mit einer vorgegebenen zeitlichen Verzögerung zueinander. Darüber hinaus kann der jeweilige Schaltvorgang des Einschaltens von 1.BV kontinuierlich oder stufenförmig von EIN auf AUS erfolgen. Der Zustand nach Schritt 9, bei dem 1.BV und 2.BV weiß ist, wird erst wieder erreicht, wenn eine Fahrzeugtür erneut geöffnet wird. Der Zustand der Türen wird daher in Schritt 12 in einer Schleife geprüft, wobei in dem Verfahren die Schleife nur verlassen wird, wenn sich der Zustand einer der Türen ändert. 1.BV und 2.BV werden in Schritt 13 beim Öffnen einer Tür wieder in den Zustand "weiß" gebracht, um der aussteigenden Person das Verlassen des Fahrzeugs zu erleichtern. In Schritt 14 wird anschließend geprüft, ob die Tür wieder geschlossen worden ist. Bei der anschließenden Verzweigungsabfrage 15 wird geprüft, ob sich überhaupt noch Insassen in dem Fahrzeug befinden oder nicht. Befinden sich noch Personen in dem Fahrzeug (INSASSEN > 0? JA), so folgt ein Sprung zu Schritt 11: 1.BV wird ausgeschaltet und der Farbort von 2.BV wird verändert. Befinden sich dagegen keine Personen mehr in dem Fahrzeug (INSASSEN > 0? NEIN), so fährt das Verfahren mit Schritt 16 fort, bei dem 1.BV und 2.BV ausgeschaltet werden. Bei "ENDE" springt dann das Programm in der Zentralsteuerung 1 wieder zu "START'. Als Eingangsgrößen für die Abfrage 15 kann das Ausgangssignal eines Sensors 3 verwendet werden, der mit dem Motor oder mit der Zentralverriegelung zusammenhängt.

In einer oben in Zusammenhang mit Fig. 1 beschriebenen bevorzugten Ausführungsform der Fahrzeuginnenraumbeleuchtung umfaßt die zweite Beleuchtungsvorrichtung 5 mindestens zwei Lichtquellen 6, 7, wobei die mindestens eine erste Lichtquelle 6 und die mindestens eine zweite Lichtquelle 7 unterschiedlich farbiges Licht abstrahlen. Entsprechend erfolgt das Ändern des Farbortes der zweiten Beleuchtungsvorrichtung 5 bei dem Verfahren für diese bevorzugte Ausführungsform der Fahrzeuginnenraumbeleuchtung durch Verkleinern der Helligkeit einer ersten Lichtquelle 6 und das Vergrößern der Helligkeit einer zweiten Lichtquelle 7. Dabei kann das Verkleinern der Helligkeit der mindestens einen ersten Lichtquelle 6 und das Vergrößern der Helligkeit der mindestens einen zweiten Lichtquelle 7 mit jeweils unterschiedlichen Zeitkonstanten erfolgen. Das hat zur Folge, daß die Helligkeit und die Farbe der Beleuchtung im Fahrgastraum unabhängig voneinander eingestellt werden können. Insbesondere wird bei einer (nicht dargestellten) weiteren bevorzugten Ausführungsform der Erfindung das weiße Licht der 2.BV durch das additive Mischen des Lichtes von drei Lichtquellen 6, 7 mit z.B. den Farben Magenta, Cyan und Gelb oder den Farben Rot, Grün und Blau erzeugt, und zum Ändern des Farbortes der zweiten Beleuchtungsvorrichtung werden eine oder zwei der drei Lichtquellen 6, 7 ausgeschaltet, so daß auch Mischfarben durch das Verkleinern der Helligkeit einer der Lichtquellen erzeugt werden können. Das Ein- und Ausschalten der einzelnen Lichtquellen kann sofort oder mit einer vorgegebenen Abklingzeit erfolgen, so daß man einen weiteren Freiheitsgrad in Bezug auf die Abhängigkeit des Farbortes von der Zeit hat. Darüber hinaus wird generell die Helligkeit der zweiten Lichtquelle 7 der zweiten Beleuchtungsvorrichtung 5 in Abhängigkeit von den Lichtverhältnissen außerhalb des Fahrzeugs eingestellt.

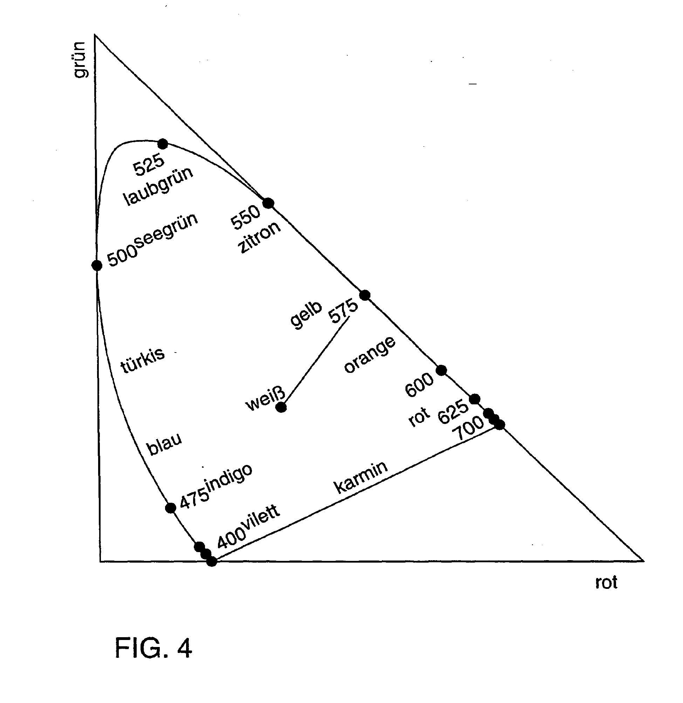

In Fig. 4 ist ein Beispiel für die Änderung des Farbortes in einem Farbdreieck dargestellt. Dabei ist auf der Vertikale der Anteil Grün dargestellt, auf der Horizontalen ist der Anteil Rot dargestellt, und die Hypotenuse stellt den Blauanteil dar. Der Bereich mit weißem Licht befindet sich in der Mitte der Darstellung. Die Farbe des Lichtes ist in dem Beispiel nach Fig. 4 gegeben durch die Grundfarben und damit durch die Koordinaten von Blau, Grün und Gelb in dem Farbdreieck. Wenn die Änderung des Farbortes, die mit einer Linie in Fig. 4 dargestellt ist, im weißen Bereich beginnt, so ändert sich das Licht der 2.BV von zunächst weiß zu gelb, dessen Wellenlänge in etwa 575 nm beträgt. Eine ähnliche Darstellung ließe sich selbstverständlich auch für die Lichtquellen mit den Grundfarben Magenta, Cyan und Gelb erzeugen.

Um die 1.BV und die 2.BV nicht unnötig ein- und auszuschalten, wenn es die Umgebungshelligkeit nicht erfordert, erfolgt vorzugsweise eine Prüfung der Helligkeit der Umgebung des Fahrzeugs in Schritt 9 und 13. Fig. 3A zeigt die genauere Abfolge von Schritt 9 aus Fig. 2, der sich aus einem Schritt 17 und der eigentlichen Einstellung von 1.BV und 2.BV zusammensetzt. Wird in Schritt 17 erkannt, daß die Umgebung ausreichend hell ist, um auf das Einschalten von 1.BV und 2.BV verzichten zu können, wird im Verfahren der Schritt 18 übersprungen und mit Schritt 10 bzw. 14 (Fig. 2) fortgefahren.

Die gleiche Abfrage nach der Helligkeit der Umgebung des Fahrzeugs erfolgt in Schritt 11. Fig. 3B zeigt die genauere Abfolge von Schritt 11 in Fig. 2. Vor der eigentlichen Einstellung von 1.BV werden auch hier die Lichtverhältnisse in der Umgebung geprüft. In Schritt 20 wird bei dunkler Umgebung 1.BV ausgeschaltet. In Schritt 21 wird die Helligkeit der ersten Lichtquelle 6 der 2.BV 5 verkleinert (<) und die Helligkeit der zweiten Lichtquelle 7 der 2.BV 5 vergrößert (>). Wird dagegen in Schritt 19 erkannt, daß die Umgebung ausreichend hell ist, um auf das Einschalten von 1.BV und 2.BV verzichten zu können, werden im Verfahren die Schritte 20 und 21 übersprungen und mit Schritt 12 (Fig. 2) fortgefahren.

Die erfindungsgemäße zweite Beleuchtungsvorrichtung 5 mit den zwei Lichtquellen 6 und 7, umfaßt vorzugsweise einen (nicht dargestellten) Lichtwellenleiter, der die beiden Lichtquellen 6 und 7 miteinander verbindet. Der Lichtwellenleiter erstreckt sich insbesondere über nahezu die gesamte Länge der Fahrgastzelle zwischen der A- und der C- Säule des Fahrzeugs.

### BEZUGSZEICHENLISTE

- 1: Zentralsteuerung für Beleuchtungsvorrichtungen des Fahrzeugs
- 2: Sensor für Umgebungslichtverhältnisse
- 3: Sensor für Zentralverriegelung/einzelne Tür/Motor/ ...
- 4: erste Beleuchtungsvorrichtung
- 5: zweite Beleuchtungsvorrichtung
- 6: erste Lichtquelle der zweiten Beleuchtungsvorrichtung
- 7: zweite Lichtquelle der zweiten Beleuchtungsvorrichtung
- 8: erste Türabfrage
- 9: erstes Ansteuern von erster und zweiter Beleuchtungsvorrichtung
- 10: zweite Türabfrage
- 11: zweites Ansteuern von erster und zweiter Beleuchtungsvorrichtung
- 12: dritte Türabfrage
- 13: drittes Ansteuern von erster und zweiter Beleuchtungsvorrichtung
- 14: vierte Türabfrage
- 15: fünftes Ansteuern von erster und zweiter Beleuchtungsvorrichtung
- 16: alternative Verzweigung
- 17: erste Abfrage der Umgebungslichtverhältnisse
- 18: Ansteuern von erster und zweiter Beleuchtungsvorrichtung
- 19: zweite Abfrage der Umgebungslichtverhältnisse
- 20: Ansteuern der ersten Beleuchtungsvorrichtung
- 21: gegensinniges Ansteuern der ersten und zweiten Lichtquelle

## Patentansprüche

1. Fahrzeuginnenraumbeleuchtung mit
einer ersten Beleuchtungsvorrichtung (4) zum Beleuchten des Fahrzeuginnenraums,
einer Zentralsteuerung (1) zum Einstellen der Helligkeit der ersten Beleuchtungsvorrichtung (4) in Abhängigkeit von Innenraumbeleuchtungsparametern des Fahrzeugs, mehreren Sensoren (2, 3) zum Erfassen der Innenraumbeleuchtungsparameter des Fahrzeugs, deren jeweiliges Ausgangssignal von der Zentralsteuerung (1) eingelesen wird,
rund einer zweiten Beleuchtungsvorrichtung (5), wobei die Farbe.des von der zweiten Beleuchtungsvorrichtung (5) ausgestrahlten Lichtes in Abhängigkeit von den Innenraumbeleuchtungsparametern des Fahrzeugs veränderbar ist,
**dadurch gekennzeichnet, dass** ein Sensor (3) zum Erfassen von Innenraumbeleuchtungsparametern des Fahrzeugs mit der Außenbeleuchtung des Fahrzeugs verbunden ist.

2. Fahrzeuginnenraumbeleuchtung nach Anspruch 2,
**dadurch gekennzeichnet, dass**
ein Sensor (3) zum Erfassen von Innenraumbeleuchtungsparametern, des Fahrzeugs mit den Fahrzeugtüren verbunden ist.

3. Fahrzeuginnenraumbeleuchtung nach einem der Ansprüche 1 oder 2,
**dadurch gekennzeichnet, dass**
ein Sensor (3) zum Erfassen von Innenraumbeleuchtungsparametern des Fahrzeugs mit dem Abblendlichtschalter des Fahrzeugs verbunden ist.

4. Fahrzeuginnenraumbeleuchtung nach einem der vorangehenden Ansprüche,
**dadurch gekennzeichnet, dass**
die zweite Beleuchtungsvorrichtung (5) mindestens zwei Lichtquellen (6, 7) umfaßt; wobei die mindestens eine erste (6) und die mindestens eine zweite Lichtquelle (7) Licht unterschiedlicher Farbe abstrahlen.

5. Fahrzeuginnenraumbeleuchtung nach Anspruch 4,
**dadurch gekennzeichnet, dass**
die Helligkeit der zweiten Lichtquelle (7) der zweiten Beleuchtungsvorrichtung (5) in Abhängigkeit von den Lichtverhältnissen außerhalb des Fahrzeugs eingestellt wird.

6. Verfahren zum Steuern einer Fahrzeuginnenraumbeleuchtung, das die Schritte umfaßt:
Erfassen von Innenraumbeteuchtungsparametern des Fahrzeugs mit Sensoren (2, 3), Vergrößern oder Verkleinern der Helligkeit einer ersten Beleuchtungsvorrichtung (4) in Abhängigkeit von den Innenraumbeleuchtungsparametern des Fahrzeugs und Ändern des Farbortes des von einer zweiten Beleuchtungsvorrichtung (5) ausgestrahlten Lichtes in Abhängigkeit von den Innehraumbeleuchtungsparaimetern des Fahrzeugs,
**dadurch gekennzeichnet, dass** die zweite Beleuchtungsvorrichtung (5) eingeschaltet wird, wenn eine Außenbeleuchtung des Fahrzeugs eingeschaltet ist.

7. Verfahren nach Anspruch 6,
**dadurch gekennzeichnet, dass**
die zweite Beleuchtungsvorrichtung (5) mindestens zwei Lichtquellen (6, 7) umfaßt, wobei die mindestens eine erste (6) und die mindestens eine zweite Lichtquelle (7) Licht unterschiedlicher Farbe abstrahlen, und
das Ändern des Farbortes der zweiten Beleuchtungsvorrichtung (5) durch Verkleinern der Helligkeit der ersten Lichtquelle (6) und das Vergrößern der Helligkeit der zweiten Lichtquelle (7) erfolgt.

8. Verfahren nach Anspruch 7,
**dadurch gekennzeichnet, dass**
das Verkleinern der Helligkeit der mindestens einen ersten Lichtquelle (6) und das Vergrößern der Helligkeit der mindestens einen zweiten Lichtquelle (7) mit jeweils unterschiedlichen Zeitkonstanten erfolgt.

9. Verfahren nach Anspruch 6,
**dadurch gekennzeichnet, dass**
das Ändern des Farbortes durch das Verkleinern der Helligkeit mindestens einer ersten Lichtquelle (6) von mehreren Lichtquellen, die jeweils Licht unterschiedlicher Farbe abstrahlen, erfolgt.

## Claims

1. Interior lighting system for a vehicle, having a first lighting device (4) for lighting the interior of the vehicle, a central control system (1) for setting the brightness of the first lighting device (4) as a function of the interior lighting system parameters of the vehicle, a plurality of sensors (2, 3) for sensing the interior lighting system parameters of the vehicle, the respective output signal of which sensors (2, 3) is read in by the central control system (1), and a second lighting device (5), it being possible to change the colour of the light emitted by the second lighting device (5) as a function of the interior lighting system parameters of the vehicle, **characterized in that** a sensor (3) for sensing interior lighting system parameters of the vehicle is connected to the external lighting of the vehicle.

2. Interior lighting system for a vehicle according to Claim 2, **characterized in that** a sensor (3) for sensing interior lighting system parameters of the vehicle is connected to the vehicle doors.

3. Interior lighting system according to Claim 1 or 2, **characterized in that** a sensor (3) for sensing interior lighting system parameters of the vehicle is connected to the dimmer switch of the vehicle.

4. Interior lighting system for a vehicle according to one of the preceding claims **characterized in that** the second lighting device (5) comprises at least two light sources (6, 7), the at least one first light source (6) and the at least one second light source (7) emitting light of different colours.

5. Interior lighting system for a vehicle according to Claim 4, **characterized in that** the brightness of the second light source (7) of the second lighting device (5) is set as a function of the light conditions outside of the vehicle.

6. Method for controlling an interior lighting system for a vehicle which comprises the steps:
sensing of interior lighting system parameters of the vehicle with sensors (2, 3), increasing or reducing the brightness of a first lighting device (4) as a function of the interior lighting system parameters of the vehicle and changing the location of the colouring of the light emitted by a second lighting device (5) as a function of the interior lighting system parameters of the vehicle, **characterized in that** the second lighting device (5) is switched on if an external lighting system of the vehicle is switched on.

7. Method according to Claim 6, **characterized in that** the second lighting device (5) comprises at least two light sources (6, 7), the at least one first light source (6) and the at least one second light source (7) emitting light of different colours, and
changing the location of the colouring of the second lighting device (5) by decreasing the brightness of the first light source (6) and increasing the brightness of the second light source (7).

8. Method according to Claim 7, **characterized in that** the decreasing of the brightness of the at least one first light source (6) and the increasing of the brightness of the at least one second light source (7) is carried out with respectively different time constants.

9. Method according to Claim 6, **characterized in that** the changing of the location of the colouring by decreasing the brightness of at least one first light source (6) is carried out by a plurality of light sources which each emit light of different colours.

## Revendications

1. Éclairage intérieur de véhicule, avec
un premier dispositif d'éclairage (4) pour éclairer l'habitacle du véhicule,
une commande centrale (1) pour régler la luminosité du premier dispositif d'éclairage (4) en fonction de paramètres d'éclairage intérieur du véhicule,
plusieurs capteurs (2, 3) pour détecter les paramètres d'éclairage intérieur du véhicule, dont le signal de sortie respectif est lu par la commande centrale (1),
et un deuxième dispositif d'éclairage (5), sachant que la couleur de la lumière émise par le deuxième dispositif d'éclairage (5) peut être modifiée en fonction des paramètres d'éclairage intérieur du véhicule,
**caractérisé en ce qu'**un capteur (3) pour détecter des paramètres d'éclairage intérieur du véhicule est relié à l'éclairage extérieur du véhicule.

2. Éclairage intérieur de véhicule selon la revendication 1, **caractérisé en ce qu'**un capteur (3) pour détecter des paramètres d'éclairage intérieur du véhicule est relié aux portes du véhicule.

3. Éclairage intérieur de véhicule selon la revendication 1 ou 2, **caractérisé en ce qu'**un capteur (3) pour détecter des paramètres d'éclairage intérieur du véhicule est relié au commutateur phares-code du véhicule.

4. Éclairage intérieur de véhicule selon l'une quelconque des revendications précédentes, **caractérisé en ce que** le deuxième dispositif d'éclairage (5) comprend au moins deux sources lumineuses (6, 7), sachant que la première source lumineuse (6) au moins unique et la deuxième source lumineuse (7) au moins unique émettent de la lumière de couleurs différentes.

5. Éclairage intérieur de véhicule selon la revendication 4, **caractérisé en ce que** la luminosité de la deuxième source lumineuse (7) du deuxième dispositif d'éclairage (5) est réglée en fonction des conditions de lumière à l'extérieur du véhicule.

6. Procédé de commande d'un éclairage intérieur de véhicule, qui comprend les étapes suivantes :
détection de paramètres d'éclairage intérieur du véhicule à l'aide de capteurs (2, 3),
augmentation ou diminution de la luminosité d'un premier dispositif d'éclairage (4) en fonction des paramètres d'éclairage intérieur du véhicule et
modification du lieu, dans le diagramme chromatique, de la couleur de la lumière émise par un deuxième dispositif d'éclairage (5) en fonction des paramètres d'éclairage intérieur du véhicule,
**caractérisé en ce que** le deuxième dispositif d'éclairage (5) est activé lorsqu'un éclairage extérieur du véhicule est activé.

7. Procédé selon la revendication 6, **caractérisé en ce que** le deuxième dispositif d'éclairage (5) comprend au moins deux sources lumineuses (6, 7), sachant que la première source lumineuse (6) au moins unique et la deuxième source lumineuse (7) au moins unique émettent de la lumière de couleurs différentes, et la modification du lieu, dans le diagramme chromatique, de la couleur du deuxième dispositif d'éclairage (5) s'effectue en diminuant la luminosité de la première source lumineuse (6) et en augmentant la luminosité de la deuxième source lumineuse (7).

8. Procédé selon la revendication 7, **caractérisé en ce que** la diminution de la luminosité de la première source lumineuse (6) au moins unique et l'augmentation de la luminosité de la deuxième source lumineuse (7) au moins unique s'effectuent avec des constantes de temps respectives différentes.

9. Procédé selon la revendication 6, **caractérisé en ce que** la modification du lieu, dans le diagramme chromatique, de la couleur s'effectue en diminuant la luminosité d'au moins une première source lumineuse (6) parmi plusieurs sources lumineuses qui émettent respectivement de la lumière de couleurs différentes.
